# EUROPÄISCHE PATENTSCHRIFT

(11) **EP 2 073 356 B1**
(45) Veröffentlichungstag und Bekanntmachung des Hinweises auf die Patenterteilung: **11.08.2010**
(21) Anmeldenummer: 08011655.1
(22) Anmeldetag: 27.06.2008
(51) Int. Cl.: H02K 3/50, H02K 15/00

(54) **Sanierverfahren fuer den Wickelkopf eines elektrischen Generators**
Refurbishment method for the coil end of an electric generator
Procédé d'assainissement pour la tête de bobine d'un générateur électrique

(30) Priorität: 21.12.2007 DE 102007062078
(43) Veröffentlichungstag der Anmeldung: 24.06.2009
(73) Patentinhaber: Sensoplan Aktiengesellschaft, 79801 Hohentengen (DE)
(72) Erfinder: Ulriksen, Nils, Dipl.-Ing. (FH), 79774 Albbruck-Albert (DE)
(74) Vertreter: Goy, Wolfgang

(56) Entgegenhaltungen:
- EP-A- 0 669 694
- DE-A1- 4 302 989
- DE-A1-102007 004 449
- US-A- 3 988 625
- US-A- 4 070 750
- US-A- 4 238 339
- US-A- 4 496 870
- US-A- 4 525 642

## Beschreibung

Die Erfindung betrifft ein Verfahren zum Sanieren des Wickelkopfs des Stators eines elektrischen Generators für die Stromgewinnung in Kraftwerken nach dem Oberbegriff des Anspruchs 1.

Der Stator eines elektrischen Generators für die Stromgewinnung in Kraftwerken besitzt an jedem der beiden Enden im Anschluß an ein Blechpaket einen Wickelkopf. Dieser Wickelkopf weist radial innenliegend Wicklungsstäbe auf, bei denen es sich um sogenannte Roebelstäbe mit Unterlage und Oberlage handeln kann. Zur Stabilisierung dieser Wicklungsstäbe sind um den Umfang herum Trapezelemente angeordnet, welche sich in Axialrichtung des Stators erstrecken. Diese Trapezelemente sind als dicke Platten ausgebildet und sind dabei jeweils fest an einem Trapezträger angeordnet. Zur weiteren Stabilisierung ist ein zur Statorachse koaxialer Stützring vorgesehen. Dieser ist durch Verschrauben fest mit den Trapezelementen verbunden.

Derartige Turbogeneratoren im Leistungsbereich zwischen ca. 400 und 800 MVA wurden bis ungefähr zum Ende der 90er Jahre teilweise mit einer direkten Wasserstoffkühlung in der Statorwicklung anstelle der sonst in dieser Leistungsklasse üblichen Wasserkühlung ausgeführt.

Die Statorwicklungen solcher Generatoren besitzen sehr lange und schwere Wickelköpfe an den beiden Enden. Diese sind besonderen Belastungen ausgesetzt. So werden die Wickelköpfe des Stators im Betrieb durch die umlaufenden elektromagnetischen Kräfte zu Schwingungen angeregt. Weiterhin wirken bei Störfällen wie beispielsweise netznahen Kurzschlüssen sehr starke Kräfte auf den Wickelkopf. Aus diesen beiden Gründen muß der Wickelkopf gegen das Blechpaket bzw. das Gehäuse des Generators abgestützt werden. Zu diesem Zweck dienen die vorerwähnten Trapezelemente sowie der Stützring.

Im Falle der direkten Wasserstoffkühlung werden die Wicklungsstäbe des Stators üblicherweise im Bereich des Wickelkopfes an ca. 15 - 20 (je nach Baugröße) Stellen gleichmäßig mit außen am Umfang verteilten, trapezförmigen Platten bandagiert, welche wiederum über Stahlträger fest mit der Preßplatte des Blechpakets verbunden sind. Ziel dieses Abstützungskonzeptes sind einerseits ein guter Verbund der Wicklungsstäbe und eine hohe Steifigkeit des Wickelkopfes, um alle zulässigen Betriebs- und Störfälle sicher zu beherrschen, und andererseits eine Eigenfrequenz der Struktur des Wickelkopfes zu schaffen, welche möglichst weit entfernt von den mit 100 Hz anregenden elektromagnetischen Kräften liegt.

Neben der Abstützung zum Beherrschen der elektromagnetischen Kräfte muß die Abstützung des Wickelkopfes allerdings zusätzlich die thermische Dehnung zwischen der Statorwicklung einerseits und dem Gehäuse bzw. Blechpaket andererseits aufgrund auftretender Temperaturdifferenzen zulassen, ohne daß im Wickelkopf unzulässig hohe Kräfte, insbesondere Scherkräfte auftreten. Hintergrund ist, daß beim Starten des Generators die Wicklungsstäbe des Stators wesentlich schneller aufgewärmt werden als das Blechpaket. Denn die Wärme durch die elektrischen Verluste entsteht direkt im Kupfer der Wicklungsstäbe. Das Kühlkonzept mit direkter Wasserstoffkühlung anstelle von Wasserkühlung resultiert aber in einer relativ großen Temperaturdifferenz der Wicklungsstäbe zwischen kaltem Zustand im Stillstand und warmem Zustand im Nennbetrieb. In Verbindung mit den langen Wickelköpfen resultiert dies in einer großen absoluten thermischen Differenzdehnung. Die feste Abstützung der Wickelstäbe im Wickelkopf mit der Preßplatte über die Trapezelemente resultiert damit in hohen Scherkräften in den Bandagenverbindungen beim Starten des Generators. Bei zunehmender Anzahl an Starts reißen diese Bandagenverbindungen auf. Dies kann in der Folge zum Verschleiß der Hauptisolation der Wicklungsstäbe an der Kontaktstelle zu den Trapezelementen und damit zu größeren Schäden führen.

Wenn an einem solchen Generator Modifikationen zum Einbringen größerer Flexibilität in die Abstützung des Wickelkopfes durchgeführt werden sollen, so geschieht dies bislang üblicherweise durch eine Neuwicklung, d.h. die Erneuerung der kompletten Statorwicklung. Diese Vorgehensweise ermöglicht nach dem Ausbau der alten Wicklung den Zugang zu den zu modifizierenden Bereichen der Wickelkopfabstützung bzw. sogar den kompletten Austausch durch eine flexiblere Konstruktion. Von Nachteil sind hierbei die damit verbundenen sehr hohen Kosten und insbesondere die lange Stillstandszeit, die für den Aus- und Einbau der Statorwicklung erforderlich ist.

US 4525642 offenbart ein Verfahren zum Sanieren des Wickelkopfs, wobei der Wickelkopf radial innen liegende Wichlungsstäbe aufweist und außen an den Wicklungsstäben unliegende, um den Umfang herum angeordnete sowie in Axialrichtung sich erstreckende, plattenförmige Trapezelemente aufweist. Dabei wird ein rigider Trapezträger durch einen flexiblen Trapezträger ausgetauscht. US 3988625 beschreibt einen Stator mit einem Wickelkopf um den ein Ring angeordnet ist, der sich über gummiatige Trapezelemente von einem weiteren Ring abstützt. Zur Erhöhung der axialen Flexibilität der Trapezerelemente sind Schlitze eingebracht.

Davon ausgehend liegt der Erfindung die **Aufgabe** zugrunde, ein Verfahren zum Sanieren des Wickelkopfes des Stators eines elektrischen Generators für die Stromgewinnung in Kraftwerken zum schaffen, bei welchem die vorhandene Statorwicklung nicht ausgebaut werden muß.

Die technische **Lösung** ist gekennzeichnet durch die Merkmale im Kennzeichen des Anspruchs 1.

Dadurch ist ein Verfahren zum Sanieren des Wickelkopfes des Stators eines elektrischen Generators für die Stromgewinnung in Kraftwerken geschaffen, bei dem die Statorwicklung nicht ausgebaut werden muß. Vielmehr kann die Statorwicklung so montiert bleiben wie sie ist. Die Grundidee des erfindungsgemäßen Sanierungsverfahrens liegt in einer Modifikation der Abstützung des Wickelkopfes zur wirksamen Verhinderung der Mechanismen, welche zu den bekannten Schäden führen. Konkret liegt die Grundidee des erfindungsgemäßen Sanierungsverfahrens in einer gezielten Einbringung von Flexibilität in die Abstützung des Wickelkopfes, um die thermische Differenzdehnung bei zulässigen Kräften zu erlauben, ohne jedoch das Scherungsverhalten oder die Kurzschlußfestigkeit negativ zu beeinflussen. So bleibt die Kurzschlußfestigkeit unverändert erhalten. Das erfindungsgemäße Sanierungsverfahren bringt die erforderlichen Modifikationen zum Erhöhen der Flexibilität der Abstützung des Wickelkopfes gezielt und kontrolliert ein, ohne daß die Statorwicklung ausgebaut werden muß. Die Dehnungsbehinderung der Wickelstäbe wird durch die erfindungsgemäße Abstützung des Wickelkopfes minimiert, indem die Kräfte auf die Bandagen reduziert werden, die Nachgiebigkeit der Abstützung erhöht wird und die Scherfestigkeit der Bandagen nicht überschritten wird. Die Grundidee mit den wesentlichen Modifikationen gegenüber der vorgegebenen Ausgangskonstruktion des Wickelkopfes besteht somit in dem Lösen des Stützringes von den Trapezelementen sowie die nachgiebige Gestaltung der Trapezelemente in axialer Richtung. Die Reihenfolge in der Durchführung dieser beiden Maßnahmen ist dabei gleichgültig. Die erforderlichen Stillstandszeiten im Vergleich zu den herkömmlichen Verfahren der Neuwicklung sowie die Kosten werden drastisch verringert, und dies bei vergleichbarem Verhalten des Wickelkopfes in Bezug auf Schwingungsverhalten, Störanfälligkeit und thermischer Differenzdehnung. Dies bedeutet, daß durch die rechtzeitige Anwendung des erfindungsgemäßen Sanierungsverfahrens ein vorzeitiger Verschleiß durch die Problematik der thermischen Differenzdehnung wirksam verhindert und damit eine Zeit- und Kostenaufwendige Neuwicklung abgewendet werden kann. Unter der "rechtzeitigen Anwendung" ist dabei zu verstehen, daß die Statorwicklung sich noch in einem Zustand befindet, der eine Weiterverwendung erlaubt, d.h. die bereits aufgetretenen Schäden dürfen nicht zu groß sein.

Die Weiterbildung gemäß Anspruch 2 geht von dem Grundkonzept aus, daß der vorhandene Stützring vollständig demontiert wird und durch einen neuen Stützring ersetzt wird, welcher jedoch nicht mehr wie bisher mit den Trapezelementen fest verbunden wird, sondern dieser neue Stützring ist von den Trapezelementen dauerhaft gelöst. Die vollständige Demontage des alten Stützringes hat den Vorteil, daß die Zugänglichkeit der Trapezelemente verbessert ist.

Vorzugsweise wird dabei gemäß Anspruch 3 als neuer Stützring ein geteilter Stützring verwendet, also ein Stützring, welcher in Ringabschnitte unterteilt ist.

Gemäß der Weiterbildung in Anspruch 4 wird vorgeschlagen, daß in die Trapezelemente jeweils ein H-förmiger Schlitz eingebracht wird. Der horizontale Mittelschenkel des "H" erstreckt sich dabei im wesentlichen in Längsrichtung des Trapezelements. Die Breite des Schlitzes ist dabei derart, daß bei einer Axialbewegung des Trapezelements die gewünschte Federwirkung erzielt wird, indem entsprechend der Verschiebebewegung der Schlitz eine Federbewegung ausführt. Selbstverständlich sind auch andere Formen von Schlitzen denkbar, welche den gewünschten Effekt bewirken.

Ein Ausführungsbeispiel des erfindungsgemäßen Verfahrens zum Sanieren des Wickelkopfes des Stators eines elektrischen Generators für die Stromgewinnung in Kraftwerken wird nachfolgend anhand der Zeichnungen beschrieben. In diesen zeigt:
- Fig. 1: eine perspektivische Darstellung des Wickelkopfes;
- Fig. 2: einen bereichsweisen Längsschnitt durch den Wickelkopf vor Durchführung der Sanierung;
- Fig. 3: einen bereichsweisen Längsschnitt durch den Wickelkopf nach Durchführung der Sanierung mit einem H-förmigen Schlitz so- wie mit einem gelösten Stützring;
- Fig. 4: eine zeichnerisch etwas modifizierte Darstellung eines Wickel- kopfes, nachdem das Trapezelement eine Axialbewegung durchgeführt hat.

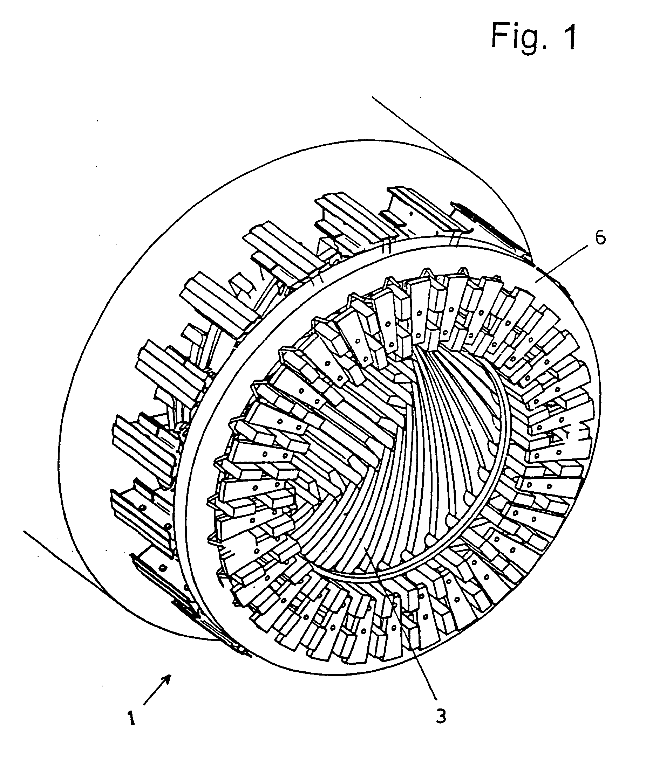

Fig. 1 zeigt das Ende eines Stators mit dem Wickelkopf 1, an welches sich das an den Stabverbinder angeschlossene Stabende 2 des Wicklungsstabes anschließt.

Der Wickelkopf 1 weist in einer Unterlage sowie in einer Oberlage Wickelstäbe 3 in Form von sogenannten Roebelstäben auf.

Von außen abgestützt werden die Wickelstäbe 3 durch Trapezelemente 4. Diese sind radial außenseitig jeweils fest an einen Trapezträger 5 angeordnet. Die Trapezelemente 4 sind dabei plattenförmig ausgebildet und erstrecken sich in Axialrichtung des Stators.

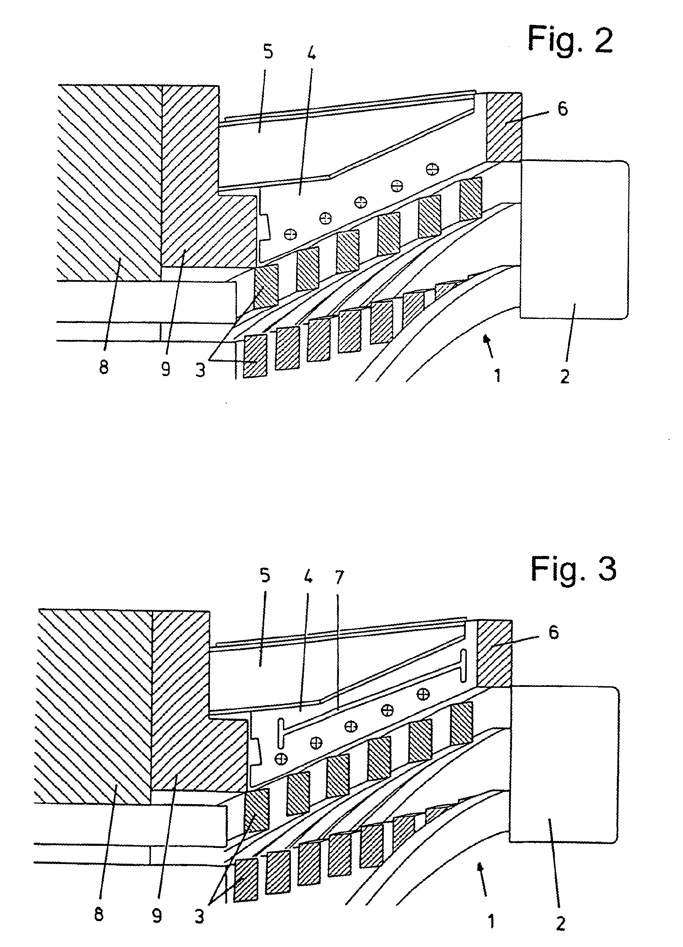

Von der Seite des Wickelkopfendes her ist noch ein Stützring 6 angeordnet. Dieser ist im Ausgangszustand des Wickelkopfes 1, wie er in den Fig. 1 und 2 dargestellt ist, durch Verschrauben fest mit den Trapezelementen 4 verbunden.

Schließlich ist in den Zeichnungen noch ein Blechpaktet 8 sowie eine Preßplatte 9 erkennbar.

Das erfindungsgemäße Sanierungsverfahren dieses Wickelkopfes 1 sieht zwei wesentliche Schritte vor:
Zum einen wird der Stützring 6 von den Trapezelementen 4 vollständig und dauerhaft gelöst (und dabei durch einen neuen, geteilten Stützring 6 ersetzt).

Zum anderen wird in sämtliche Trapezelemente 4 jeweils ein durchgehender H-förmiger Schlitz 7 eingebracht.

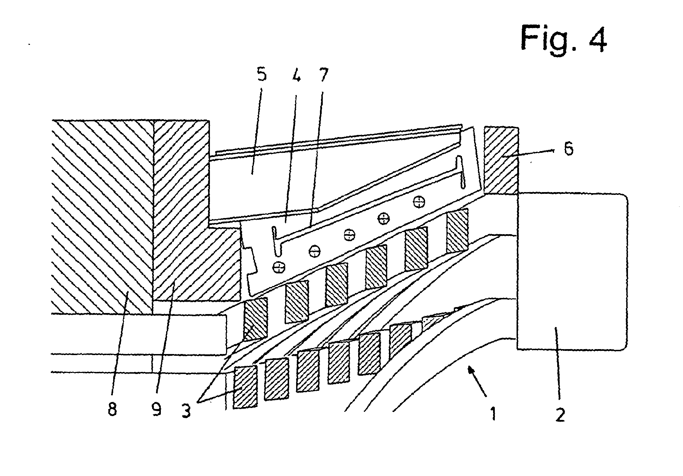

Die dynamischen Effekte, welche damit erzielt werden, sind in Fig. 4 erkennbar. Fig. 4 zeigt, daß bei einer Axialbewegung der Trapezelemente 4 sich der H-förmige Schlitz 7 derart verformt, daß er die Funktion einer Feder erfüllt. Denn durch den H-förmigen Schlitz 7 wird die Flexibilität des am Wickelkopf (1) anliegenden Teils des Trapezelements (4) in Axialrichtung des Stators erhöht.

Wie in Fig. 4 erkennbar ist, liegt die allgemeine, abstrakte Grundidee in der Ausbildung des oder der Schlitze/s darin, daß diese sich unter einem Winkel bezüglich der Verschieberichtung des Trapezelemente 4 erstrecken, deren lichte Weite sich bei einer Axialbewegung der Trapezelemente 4 verringert. Durch eine entsprechende Formgebung der Schlitze 7 kann die Federkonstante entsprechend eingestellt werden.

Beispielsweise ist es auch denkbar, mehrere zueinander parallele Schlitze in das Trapezelement 4 einzubringen, welche bezüglich der Bewegungsrichtung des Trapezelements 4 schräg angestellt sind.

In Fig. 4 ist weiterhin erkennbar, daß sich die Trapezelemente 4 völlig unabhängig von der festen Position des Stützrings 6 bewegen.

Selbstverständlich sind auch andere Schlitzformen denkbar. Sie müssen lediglich den Zweck erfüllen, daß die Trapezelement 4 in Axialrichtung eine Federwirkung erzeugen.

### Bezugszeichenliste

- 1: Wickelkopf
- 2: Stabende
- 3: Wickelstab
- 4: Trapezelement
- 5: Trapezträger
- 6: Stützring
- 7: Schlitz
- 8: Blechpaket
- 9: Preßplatte

## Patentansprüche

1. Verfahren zum Sanieren des Wickelkopfes (1) des Stators eines elektrischen Generators für die Stromgewinnung in Kraftwerken,
wobei der Wickelkopf (1)
mit radial innenliegenden Wicklungsstäben (3),
mit außen an den Wicklungsstäben (3) anliegenden, um den Umfang herum angeordneten sowie in Axialrichtung sich erstreckenden, plattenförmigen Trapezelementen (4) sowie
mit einem mit den Trapezelementen (4) fest verbundenen, zur Statorachse koaxialen Stützring (6)
versehen ist,
wobei die feste Verbindung des Stützrings (6) mit den Trapezelementen (4) dauerhaft gelöst wird und die Trapezelemente (4) im am Wickelkopf (1) montierten Zustand derart durch Einbringen von durch die Trapezelemente (4) durchgehenden Schlitzen (7) modifiziert werden, daß die Flexibilität der Trapezelemente (4) in Axialrichtung des Stators erhöht wird.

2. Verfahren nach dem vorhergehenden Anspruch,
**dadurch gekennzeichnet,**
**daß** zunächst der Stützring (6) demontiert wird,
**daß** anschließend die Trapezelemente (4) modifiziert werden und
**daß** schließlich ein neuer Stützring (6) montiert wird.

3. Verfahren nach Anspruch 2,
**dadurch gekennzeichnet,**
**daß** als neuer Stützring (6) ein geteilter Stützring (6) verwendet wird.

4. Verfahren nach einem der vorhergehenden Ansprüche,
**dadurch gekennzeichnet,**
**daß** in die Trapezelemente (4) wenigstens ein Schlitz (7), insbesondere ein H-förmiger Schlitz (7), eingebracht wird, der mit der Verschieberichtung des Trapezelements (4) einen Winkel einschließt.

5. Stator eines elektrischen Generators für die Stromgewinnung in Kraftwerken mit einem Wickelkopf (1), wie er nach der Sanierung gemäß einem der Ansprüche 1 bis 4 ausgebildet ist.

## Claims

1. Method for refurbishing the coil end (1) of a stator of an electric generator for generating current in power stations, wherein the coil end (1) is provided with radially inner winding bars (3), with plate-shaped trapezoidal elements (4) resting on the outside of the winding bars (3), arranged around the periphery and extending in the axial direction, and with a support ring (6) which is rigidly connected to the trapezoidal elements (4) and coaxial to the stator axis, wherein the rigid connection of the support ring (6) to the trapezoidal elements (4) is permanently released and the trapezoidal elements (4), in the state assembled on the coil end (1), are modified by the introduction of slots (7) passing through the trapezoidal elements (4) in such a way that the flexibility of the trapezoidal elements (4) in the axial direction of the stator is increased.

2. Method according to the preceding claim, **characterised in that** the support ring (6) is firstly disassembled, **in that** the trapezoidal elements (4) are modified and that a new support ring (6) is finally assembled.

3. Method according to claim 2, **characterised in that** a divided support ring (6) is used as the new support ring (6).

4. Method according to any one of the preceding claims, **characterised in that** at least one slot (7), in particular an H-shaped slot (7), is introduced into the trapezoidal elements (4) and encloses an angle with the displacement direction of the trapezoidal element (4).

5. Stator of an electric generator for generating current in power stations with a coil end (1), as configured after the refurbishment according to any one of claims 1 to 4.

## Revendications

1. Procédé pour réhabiliter la tête de bobinage (1) du stator d'un générateur électrique pour la production de courant dans des centrales électriques,
la tête de bobinage (1) étant pourvue
de barres d'enroulement (3) radialement intérieures,
d'éléments trapézoïdaux (4) en forme de plaque reposant extérieurement sur les barres d'enroulement (3), disposés sur la circonférence et s'étendant en direction axiale
ainsi que
d'une bague d'appui (6) assemblée rigidement avec les éléments trapézoïdaux (4), coaxiale à l'axe du stator,
l'assemblage rigide de la bague d'appui (6) avec les éléments trapézoïdaux (4) étant défait durablement et
les éléments trapézoïdaux (4) étant modifiés, à l'état monté sur la tête de bobinage (1), par la réalisation de fentes (7) traversant les éléments trapézoïdaux (4) de façon que la flexibilité des têtes de bobinage (1) en direction axiale du stator soit augmentée.

2. Procédé selon la revendication précédente,
**caractérisé en ce**
**qu'**en premier lieu la bague d'appui (6) est démontée,
**qu'**ensuite les éléments trapézoïdaux (4) sont modifiés et
**qu'**enfin une nouvelle bague d'appui (6) est montée.

3. Procédé selon la revendication 2,
**caractérisé en ce**
**qu'**une bague d'appui (6) segmentée est utilisée comme nouvelle bague d'appui (6).

4. Procédé selon une des revendications précédentes,
**caractérisé en ce**
**qu'**au moins une fente (7), en particulier une fente (7) en forme de H, est réalisée dans les éléments trapézoïdaux (4), laquelle fait un angle avec la direction de déplacement de l'élément trapézoïdal (4).

5. Stator d'un générateur électrique pour la production de courant dans des centrales électriques avec une tête de bobinage (1) telle qu'elle est conçue après la réhabilitation selon une des revendications 1 à 4.
